## Europäisches Patentamt
## European Patent Office
## Office européen des brevets

(11) Veröffentlichungsnummer: **0 121 836**
**B1**

(12) **EUROPÄISCHE PATENTSCHRIFT**

(45) Veröffentlichungstag der Patentschrift:
**24.06.87**

(21) Anmeldenummer: **84103137.0**

(22) Anmeldetag: **22.03.84**

(51) Int. Cl.⁴: **G 03 B 27/00, G 03 B 27/52**

(54) Kopiervorrichtung mit Schreibeinrichtung.

(30) Priorität: **26.03.83 DE 3311182**

(43) Veröffentlichungstag der Anmeldung:
**17.10.84 Patentblatt 84/42**

(45) Bekanntmachung des Hinweises auf die Patenterteilung:
**24.06.87 Patentblatt 87/26**

(84) Benannte Vertragsstaaten:
**DE GB NL**

(56) Entgegenhaltungen:
**CH - A - 416 323**
**DE - A - 2 924 155**
**DE - A - 3 132 633**
**GB - A - 1 570 884**

(73) Patentinhaber: **METEOR-SIEGEN Apparatebau Paul Schmeck GmbH, Frankfürter Strasse 27, D-5900 Siegen (DE)**

(72) Erfinder: **Kübler, Herbert, Am Südhang 54, D-5242 Kirchen (DE)**
Erfinder: **Leis, Werner, Köhler Weg 7, D-5900 Siegen (DE)**
Erfinder: **Isermann, Heinrich, Mozartstrasse 41, D-5900 Siegen (DE)**

(74) Vertreter: **Eisenführ & Speiser, Martinistrasse 24, D-2800 Bremen 1 (DE)**

## Beschreibung

Die Erfindung betrifft eine Vorrichtung zum Kopieren von blattförmigen Vorlagen, insbesondere eine Lichtpausmaschine, mit einer Transporteinrichtung, welche das Kopiermaterial durch eine Belichtungs- sowie eine Entwicklungsstation führt und in eine Ausgabestation fördert, und mit einer Einrichtung zum Beschriften des Kopiermaterials während seines Vorschubs, die einen (in bezug auf den Vorschub) stationären Schreibkopf aufweist, welcher mit einer Steuereinrichtung verbunden ist und die Beschriftung schrittweise auf das vorbeilaufende Kopiermaterial aufbringt.

Bei einer bekannten Lichtpausmaschine ist im Bereich der Ausgabestation als Schreibeinrichtung eine an ihrem Umfang mit Schriftzeichen versehene Rolle angeordnet, welche kurzzeitig gegen das in die Ausgabestation geförderte Kopiermaterial gedrückt werden kann. Die Rolle wird durch Reibung vom Kopiermaterial mitgenommen und druckt dabei die Schriftzeichen auf dem Kopiermaterial ab.

Diese Anordnung zum Beschriften oder Bedrucken von Kopiermaterial in Kopiermaschinen ist in mehrfacher Hinsicht nachteilig. Die Reibungsmitnahme der Rolle führt zu einer mechanischen Beanspruchung insbesondere des Kopiermaterials, zumal die Rolle bei Beginn des Druckvorganges beschleunigt werden muss. Letzteres führt auch dazu, dass der Beschriftungsanfang unsauber wird. Vor allem aber können immer nur die auf der Schreibrolle angeordneten Schriftzeichen o.dgl. abgedruckt werden; soll die Beschriftung geändert werden, so muss man die Schreibrolle auswechseln.

Aus der DE-A 3 132 633 ist ein Fotokopiergerät mit den eingangs angegebenen Merkmalen bekannt. Die aus einem Druckkopf mit Druckwalze und Farbband bestehende Schreibeinrichtung dient dazu, vornehmlich auf Belegkopien, die im Kopiergerät verschlossen abgelegt werden, Angaben über den jeweiligen Benutzer des Kopiergeräts anzubringen. Diese Angaben werden einer vom Benutzer in das Kopiergerät einzuführenden Schlüsselkarte entnommen und über eine Steuereinrichtung auf den Schreibkopf gegeben. Zwar erfordert diese Schreibkopfsteuerung ebenso wie das aus der CH-A 416 323 bekannte Verfahren zum Aufbringen von Codes auf fotografisch hergestellte Papierbilder keine Umrüstung der Schreibeinrichtung bei Änderung des Aufdrucks, jedoch bedarf es im einen wie im anderen Fall eines Aufzeichnungsträgers, der seine Information an das Kopiergerät abgibt, und der im Falle einer Änderung der Beschriftung ausgewechselt werden muss. In beiden Fällen wird das Fotokopiermaterial mit einer festen Vorschubgeschwindigkeit durch das Kopiergerät transportiert, und auch die Schreibgeschwindigkeit des Schreibkopfes ist stets die gleiche.

Der Erfindung liegt demgegenüber die Aufgabe zugrunde, eine Anordnung anzugeben, bei der die Schreibeinrichtung rasch und häufig wechselnde Beschriftungen aufbringen kann, ohne dass es umständlicher Bedienung bedarf, und die auch in solchen Kopiergeräten einsetzbar ist, in denen – wie beispielsweise bei Lichtpausmaschinen – das Kopiermaterial mit unterschiedlicher Geschwindigkeit vorgeschoben wird.

Diese Aufgabe wird erfindungsgemäss dadurch gelöst, dass die Steuereinrichtung frei programmierbar ist und einerseits den zu beschriftenden Bereich des mit veränderlicher Geschwindigkeit vorschiebbaren Kopiermaterials unmittelbar vor dessen Passieren der Beschriftungseinrichtung auf eine vorbestimmte Vorschubgeschwindigkeit steuert sowie andererseits den Betrieb der Beschriftungseinrichtung auslöst und programmierte Schreibimpulse auf den Schreibkopf gibt.

Der Schreibkopf, der beispielsweise aus einem Tintenejektor besteht, kann praktisch jedes beliebige Zeichen (Buchstabe, Ziffer, Symbol, Code) auf das Kopiermaterial aufbringen, wobei die Steuereinrichtung mit Hilfe der von ihr an den Schreibkopf gegebenen Schreibimpulse die jeweils geschriebenen Zeichen bestimmt. Diese Schreibimpulse – und damit die Art und Sequenz der geschriebenen Zeichen – sind in der Steuereinrichtung (bzw. einem zu ihr gehörenden Speicher) frei programmierbar. Es ist daher durch blosse Änderung der Programmierung möglich, die von der Schreibeinrichtung auf das Kopiermaterial aufgebrachten Beschriftungen zu ändern, so dass beispielsweise Lichtpausen, welche eine Lichtpausmaschine unmittelbar aufeinanderfolgend verlassen, unterschiedlich beschriftet werden können. Im Gegensatz zu der aus der GB-A 1 570 884 bekannten Massnahme, die Schreibgeschwindigkeit der jeweils unterschiedlichen und wechselnden, von einem Sensor aufgenommenen Vorschubgeschwindigkeit fotografischen Materials anzupassen, wird dabei die Schreibgeschwindigkeit konstant gehalten und die Vorschubgeschwindigkeit des im übrigen auch mit variabler Geschwindigkeit transportierten Kopiermaterials mit der gleichbleibenden Schreibgeschwindigkeit der Schreibeinrichtung synchronisiert.

Die Synchronisation zwischen Kopiermaterialvorschub und Schreibkopfbetrieb braucht sich so nicht auf den gesamten Kopiervorgang, d.h. nicht auf die gesamte Vorschublänge des Kopiermaterials auszuwirken. Es genügt vielmehr, wenn die Synchronisation nur bezüglich desjenigen Kopiermaterialabschnittes erfolgt, auf dem die Beschriftung vorgenommen wird. Bei Lichtpausen von technischen Zeichnungen ist dies beispielsweise der Bereich des Schriftfeldes, welches stets der Hinterkante sowohl der Vorlage als auch des Kopiermaterials benachbart ist.

In solchem Falle kann ein Sensor vorgesehen sein, der auch den Durchlauf der Hinterkante des Kopiermaterials überwacht und in Abhängigkeit hiervon den Betrieb der Schreibeinrichtung auslöst. Die Überwachung des Hinterkanten-Durchlaufs durch den Sensor reicht aus, wenn mit der (möglicherweise verzögerten) Auslösung des Betriebs der Schreibeinrichtung auch die Vorschubgeschwindigkeit des Kopiermaterials auf einen vorbestimmten (der Schreibgeschwindigkeit entsprechenden) Wert gesteuert wird; diese «programmierte Synchronisierung» ist in der Steuereinrichtung gespeichert und wird vom Sensor ebenfalls nur ausgelöst.

Mit einem Schreibkopf kann jeweils nur eine Zeile von Schriftzeichen o.dgl. auf das Kopiermaterial aufgebracht werden. Werden mehrere Zeilen benötigt, so werden vorteilhaft mehrere Schreibköpfe in Vorschubrichtung des Kopiermaterials nebeneinander angeordnet, die parallel an die Steuereinrichtung angeschlossen sind, also auch parallel (gleichzeitig) ihre jeweiligen Schreibimpulse erhalten.

Lichtpauspapiere sind mit einer Beschichtung versehen, in die üblicherweise in Tintenejektoren verwendete Tinten (auf Glykolbasis) nicht eindringen können. Andererseits muss schon wegen des häufig unmittelbar anschliessenden Faltens der Kopie die Beschriftung sehr rasch wischfest sein. Zusätzliche Probleme und Bedingungen ergeben sich aus der Tatsache, dass zur Vermeidung zusätzlicher Umlenkungen des Kopiermaterials die Tinte senkrecht, und zwar von oben nach unten, ausgestossen werden muss, während Tintenejektoren sonst so angeordnet sind, dass sie die Tinte waagerecht ausstossen. Hierauf muss u.a. die Oberflächenspannung der Tinte Rücksicht nehmen.

Es wurde gefunden, dass sich diese Schwierigkeiten vermindern oder ganz beseitigen lassen, wenn kurz vor oder hinter der Schreibeinrichtung, mit dieser in Vorschubrichtung des Kopiermaterials fluchtend eine Einrichtung zum Auftragen eines Fluids (wie Wasserdampf oder Alkohol) auf das Kopiermaterial vorgesehen ist, um dessen Beschichtung wenigstens zeitweilig aufzubrechen und die Tinte in seine Papierlage eindringen zu lassen.

Ferner kann wegen des erforderlichen Unterdruck-Betriebs der Tintenejektoren vorgesehen sein, dass der Tintenejektor oberhalb und der Tinten-Vorratsbehälter unterhalb der Vorschubbahn des Kopiermaterials angeordnet ist, dass beide durch einen Schlauch verbunden sind, und dass der Schlauch nach Art der Flaschenzug-Einscherung über eine lose und zwei ortsfeste Rollen geführt ist, um Volumenänderungen zwischen Ejektor und Vorratsbehälter zu vermeiden, wenn beispielsweise der Ejektor verschoben wird.

Eine Weiterbildung der Erfindung sieht vor, dass die Schreibeinrichtung in Vorschubrichtung des Kopiermaterials vor der Belichtungsstation angeordnet ist. Bei Lichtpausmaschinen hat diese Anordnung den Vorteil, dass sich eine Verstärkung der Beschriftung ergibt, weil in der nachfolgenden Belichtungs- und Entwicklungsstation das unter den Schriftzeichen liegende Diazomaterial so behandelt wird, als sei an dieser Stelle die Vorlage lichtundurchlässig gewesen: Im Bereich der Beschriftung erfolgt also (zusätzlich) der Farbumschlag des Diazomaterials. Dieser Gedanke, Farbumschläge durch Diazokopplung durch gesteuertes Aufbringen einer Abdeckung unmittelbar auf das Kopiermaterial zu erzeugen, ist ersichtlich nicht auf den hier behandelten Anwendungsfall der Beschriftung beschränkt, wenngleich er dort auch mit Vorzug Anwendung finden kann.

Andere Weiterbildungen der Erfindung sehen vor, dass die Steuereinrichtung des Schreibkopfes mit der Steuerung anderer Funktionen der Gesamtvorrichtung verknüpft ist. Beispielsweise kann das Schreibprogramm zum Aufbringen unterschiedlicher Adressaten eines bestimmten Verteilerschlüssels auf mehrere Kopien derselben Vorlage mit der Repetiersteuerung für die Vorlage verknüpft sein.

Andererseits können die vom Schreibkopf oder den Schreibköpfen aufgebrachten Zeichen dazu benutzt werden, nachgeschaltete Funktionen, beispielsweise eines Heftrandlochers oder einer Faltmaschine zu steuern. Die nachgeschalteten Einrichtungen sind dann mit Abtasteinrichtungen versehen, welche auf die vom Schreibkopf aufgebrachten Zeichen ansprechen und ggf. die betreffenden Einrichtungen in Betrieb setzen.

Die Zeichnungen veranschaulichen die Erfindung an einem Ausführungsbeispiel, und zwar zeigt:

Fig. 1 in teilweise geschnittener Seitenansicht eine Lichtpausmaschine mit einer Beschriftungsstation und einer nachgeschalteten Faltmaschine;

Fig. 2 in schematischer Draufsicht die Anordnung der Beschriftungsstation gemäss Fig. 1 sowie in verschiedenen Phasen das bei unterschiedlichen Kopiermaterial-Formaten bewirkte Beschriften.

Der im ganzen mit 1 bezeichneten Lichtpausmaschine ist eine in Vorschubrichtung hinter dem Austritt des Kopiermaterials angeordnete Beschriftungsstation 2 zugeordnet. Hieran schliesst sich eine Faltmaschine 3 an. Das Kopiermaterial 4 ist mit gestrichelten Linien dargestellt.

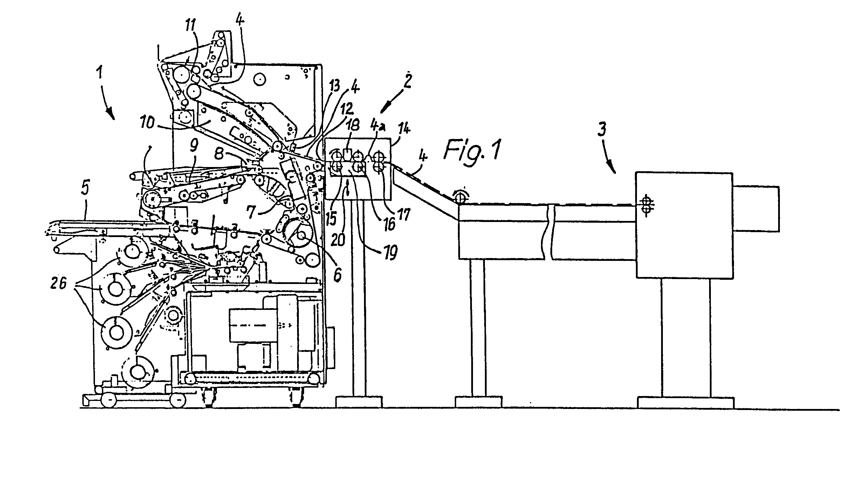

In bekannter Weise wird ein zu pausendes Original über den Vorlagentisch 5 in die Maschine eingeführt. Automatisch wird von einer der Vorratsrollen 26 Kopiermaterial abgezogen und mit dem Original zusammen an der Belichtungsstation 6 vorbeigeführt. In der Trennstation 7 werden Original und Kopiermaterial wieder voneinander getrennt. Das Original wird entweder bei 8 ausgegeben oder durch die Repetiervorrichtung 9 in den Einlauf zurückgeführt. Das Kopiermaterial 4 gelangt durch die Entwicklungsstation 10 in die Entgasungsstation 11 und wird zum Auslauf 12 hin umgelenkt. Kurz vor Erreichen des Austritts 12 passiert das Kopiermaterial 4 einen Sensor 13, der hier aus einer die Hinterkante des Kopiermaterials ertastenden Lichtschranke besteht. Der Sensor 13 aktiviert – über eine nicht dargestellte und keine nähere Beschreibung erfordernde Steuereinrichtung – die Beschriftungsstation 2, deren Aufbau und Funktion gemäss Fig. 1 nachstehend beschrieben wird.

In einem Gehäuse 14 sind drei Rollenpaare 15, 16 und 17 dreh- und antreibbar gelagert. In der Ruhestellung der Beschriftungsstation lassen alle Rollenpaare 15, 16 und 17 einen Durchtrittsspalt für das Kopiermaterial 4 offen. Zwischen den Rollenpaaren 15 und 16 ist die Schreibeinrichtung 18 angeordnet, und das Rollenpaar 17 hat vom Rollenpaar 16 einen solchen Abstand, dass sich (im Betrieb) zwischen diesen eine Schleife 4a aus Kopiermaterial ausbilden kann.

Die Schreibeinrichtung 18 ist (in nicht dargestellter Weise) an die Steuereinrichtung angeschlossen und erhält von dieser Schreibimpulse mit einer vorbestimmten Geschwindigkeit. Solange die Hinterkante eines Blattes von Kopiermaterial 4 noch nicht am Sensor 13 vorbeigelaufen ist, hängt die Geschwindigkeit, mit der das Kopiermaterial 4 die verschiedenen Stationen in der Lichtpausmaschine 1 und den Spalt zwischen den Rollenpaaren 15, 16 und 17 der Beschriftungsstation 2 durchläuft, von der für die richtige Belichtung im Einzelfall erforderlichen Vorschubgeschwindigkeit durch die Belichtungsstation 6 ab. Diese Vorschubgeschwindigkeit kann – und wird im allgemeinen – geringer sein als die höchstmögliche Durchlaufgeschwindigkeit (wie sie allenfalls etwa bei einer glasklaren Vorlage wegen deren hoher Transparenz vorkommt).

Die Rollenpaare 15 und 16 der Beschriftungsstation 2 werden jedoch dauernd mit einer vorbestimmten Umfangsgeschwindigkeit angetrieben, die mindestens jener höchsten Durchlaufgeschwindigkeit des Kopiermaterials durch die Lichtpausmaschine 1 entspricht. Solange die Rollen der Rollenpaare aber auseinanderbewegt sind und einen Durchtrittsspalt bilden, wirkt sich dies nicht aus; allenfalls wird von den unteren Rollen auf das darübergleitende Kopiermaterial ein gewisser Zug ausgeübt. Sobald aber der Sensor 13 den Durchlauf der Hinterkante des Kopiermaterial-Blattes meldet, bewegt die Steuereinrichtung die Rollen der Rollenpaare 15, 16 gegeneinander. Zu diesem Zwecke sind die unteren Rollen beider Rollenpaare 15, 16 in einem gemeinsamen Schlitten 19 gelagert, welcher dem Pfeil 20 entsprechend hin und her bewegt werden kann. Infolge Schliessens des bisher offenen Durchtrittsspalts wird das Kopiermaterial 4 auf die vorbestimmte Umfangsgeschwindigkeit der Rollenpaare 15, 16 beschleunigt. Hierdurch erfolgt eine Synchronisation der Vorschubgeschwindigkeit des Kopiermaterials 4 auf die jener vorbestimmten Geschwindigkeit angepasste Schreibgeschwindigkeit der Schreibeinrichtung 18.

Statt der Rollenpaare 15, 16 kann jeweils nur eine untere Rolle vorgesehen sein, auf die seitlich gehaltene, aber vertikal frei bewegliche Kugeln aufgelegt sind. Solange der Antrieb in der Lichtpausmaschine 1 die Vorschubgeschwindigkeit des Kopiermaterials 4 bestimmt, schlupfen die sich mit (im allgemeinen) höherer Umfangsgeschwindigkeit drehenden Rollen unter dem Kopiermaterial 4 durch. Verlässt dieses aber die Transporteinrichtung der eigentlichen Lichtpausmaschine 1, so reicht die von den Kugeln erzeugte Friktion zwischen den Rollen und dem Kopiermaterial aus, dieses auf die gewünschte (höhere) Geschwindigkeit zu beschleunigen und somit der Schreibgeschwindigkeit der Schreibeinrichtung zu synchronisieren; in diesem Fall ersetzt die Freigabe der Kopiermaterial-Hinterkante durch die Transporteinrichtung der Lichtpausmaschine das Sensor-Signal.

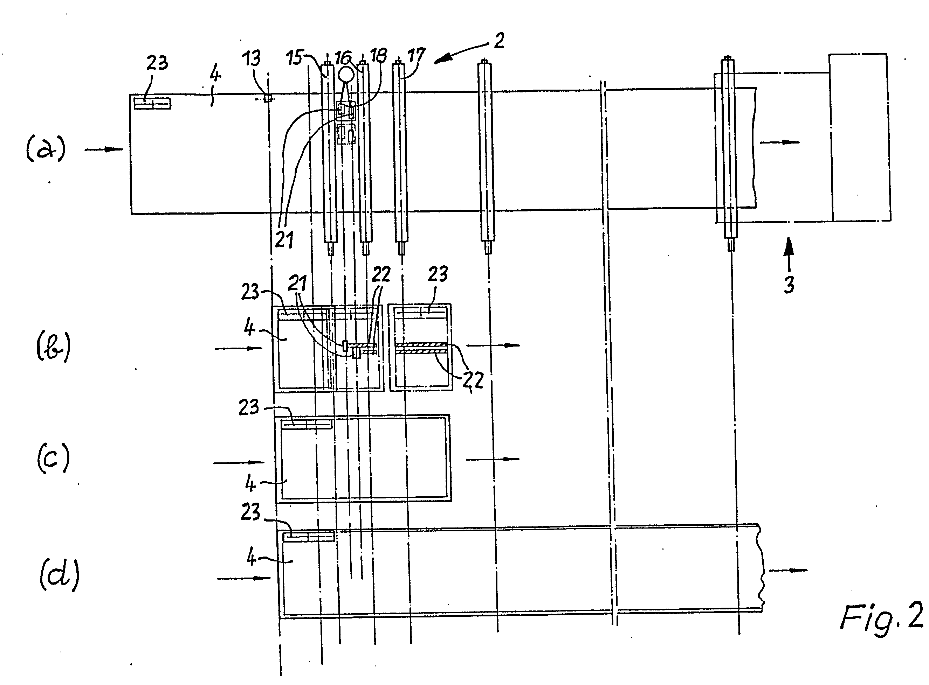

Die Schreibeinrichtung 18 erhält von der Steuereinrichtung gleichzeitig bzw. mit der zur Beschleunigung des Kopiermaterials 4 erforderlichen Verzögerung Schreibimpulse, aufgrund derer der Schreibkopf 21 (Fig. 2) das Kopiermaterial 4 beschriftet. Der Beschriftungsinhalt entspricht der Programmierung der Steuereinrichtung.

Mit den Rollenpaaren 15, 16 ist auch das Rollenpaar 17 geschlossen worden. Dessen Umfangsgeschwindigkeit ist jedoch geringer als die Umfangsgeschwindigkeit der Rollenpaare 15, 16, so dass sich zwischen den Rollenpaaren 16, 17 die schon oben erwähnte Schleife 4a aus dem Kopiermaterial 4 bildet. Vorteilhaft entspricht die Umfangsgeschwindigkeit der Rollen des Rollenpaares 17 der Vorschubgeschwindigkeit des Kopiermaterials 4 in der Faltmaschine 3.

Fig. 2 veranschaulicht den oben beschriebenen Aufbau und die Funktion der in Fig. 1 dargestellten Beschriftungsstation 2 zusätzlich. Dargestellt sind untereinander der Durchlauf eines Wildmassbogens von Kopiermaterial 4 durch die mit ihren wichtigsten Bestandteilen schematisch dargestellte Beschriftungsstation 2 (Fig. Abschnitt a); der entsprechende Durchlauf eines DIN-A 4-Bogens von Kopiermaterial 4 durch die Beschriftungsstation 2 in verschiedenen Phasen (b); der Durchlauf eines grösseren Bogens von Kopiermaterial 4 (c) und der Durchlauf eines noch grösseren Bogens (d). Dabei ist in den Figurenabschnitten b) bis d) jeweils der Moment (mit ausgezogenen Linien) dargestellt, in welchem die Hinterkante des Bogens den Sensor 13 passiert.

Der Figurabschnitt a) zeigt, dass die im Beispiel zwei Schreibköpfe 21 aufweisende Schreibeinrichtung 18 quer zur Papiervorschubrichtung verschiebbar ist, um die Queranordnung der Beschriftung verändern zu können. Auch diese Verschiebung unterliegt vorzugsweise der Steuerung durch die Steuereinrichtung; sie kann dort in Abhängigkeit von der – durch Lichtschranken ertasteten – Querbreite des Kopiermaterials 4 oder in Abhängigkeit von anderen Kriterien programmiert sein.

Die im Figurabschnitt b) dargestellten Phasen der Beschriftung eines DIN-A 4 Blattes von Kopiermaterial 4 zeigen, dass zu Beginn des Vorganges (ausgezogene Linien = die Hinterkante des Kopiermaterials 4 passiert den Sensor 13) das Rollenpaar 15 das Blatt beschleunigt. In der nächsten (strichpunktiert dargestellten) Phase haben die Schreibköpfe 21 begonnen, die mit schraffierten Linien angegebenen Beschriftungen 22 auf das Kopiermaterial aufzubringen. In der dritten dargestellten Phase ist die Beschriftung beendet; sie erstreckt sich in Vorschubrichtung des Kopiermaterials 4 über den gesamten Bereich des Schriftfeldes 23 des Blattes von Kopiermaterial.

Die Figurenabschnitte c) und d) veranschaulichen, dass infolge der Hinterkanten-Auslösung durch den Sensor 13 die Beschriftungen 22 relativ zum Schriftfeld 23 unabhängig von der Länge des Kopiermaterials 4 in Vorschubrichtung immer an der gleichen Stelle des Blattes von Kopiermaterial 4 angebracht werden.

In den Zeichnungen nicht dargestellt ist die Ausbildung und Anordnung der Schreibköpfe 21 im einzelnen. Bei diesen handelt es sich um handelsübliche Tinten-Ejektoren, die jedoch wegen der Führung des Kopiermaterials vertikal von oben nach unten die Tinte ausstossen müssen. Da die in in einem Vorratsbehälter bereitgehaltene Tinte mit Unterdruck im Schreibkopf ansteht und deshalb der Vorratsbehälter (Kartusche) unter dem Schreibkopf angeordnet sein muss, andererseits der Schreibkopf aber nur einen geringen Abstand vom Kopiermaterial haben darf, ist der Vorratsbehälter unter dem Kopiermaterial angeordnet. Dies erfordert eine relativ lange Verbindungsleitung, die wegen der Querverschiebbarkeit der Schreibköpfe als Schlauchleitung ausgebildet ist. Um im Betrieb das zwischen Vorratsbehälter und Schreibköpfen befindliche Tintenvolumen konstant zu halten (auch beim Verschieben der Schreibköpfe), damit weder Tinte unbeabsichtigt aus dem Schreibkopf austritt noch Tinte aus dem Schreibkopf zurückgesaugt wird, ist die Schlauchleitung nach Flaschenzugart über eine lose Rolle und zwei ortsfeste Rollen geführt, so dass sich am Anteil der Schlauchumlenkungen (dort ändert sich der Schlauchquerschnitt und damit das Tintenvolumen) am Gesamtschlauch auch bei dessen Lageveränderung nichts ändert.

**Patentansprüche**

1. Vorrichtung zum Kopieren von blattförmigen Vorlagen, insbesondere Lichtpausmaschine, mit einer Transporteinrichtung, welche das Kopiermaterial durch eine Belichtungs- sowie eine Entwicklungsstation führt und in eine Ausgabestation fördert, und mit einer Einrichtung zur Beschriftung des Kopiermaterials während seines Vorschubs, die einen in bezug auf den Vorschub stationären Schreibbkopf aufweist, welcher mit einer Steuereinrichtung verbunden ist und die Beschriftung schrittweise auf das vorbeilaufende Kopiermaterial aufbringt, dadurch gekennzeichnet, dass die Steuereinrichtung frei programmierbar ist und einerseits den zu beschriftenden Bereich des mit veränderlicher Geschwindigkeit vorschiebbaren Kopiermaterials (4) unmittelbar vor dessen Passieren der Beschriftungseinrichtung (18) auf eine vorbestimmte Vorschubgeschwindigkeit steuert sowie andererseits den Betrieb der Beschriftungseinrichtung (18) auslöst und programmierte Schreibimpulse für gleichbleibende Schreibgeschwindigkeit auf den Schreibkopf (21) gibt.

2. Vorrichtung nach Anspruch 1, dadurch gekennzeichnet, dass die Steuereinrichtung in Abhängigkeit vom Durchlauf der Hinterkante des Kopiermaterials (4) durch eine Überwachungsstation in Tätigkeit tritt.

3. Vorrichtung nach Anspruch 2, dadurch gekennzeichnet, dass die Überwachungsstation einen Sensor (13) umfasst.

4. Vorrichtung nach einem der vorhergehenden Ansprüche, dadurch gekennzeichnet, dass eine mehrzeilige Schreibeinrichtung (18) mehrere in Vorschubrichtung des Kopiermaterials (4) nebeneinander angeordnete Schreibköpfe (21) aufweist, die parallel an die Steuereinrichtung angeschlossen sind.

5. Vorrichtung nach einem der vorhergehenden Ansprüche, dadurch gekennzeichnet, dass der bzw. jeder Schreibkopf (21) quer zur Vorschubrichtung des Kopiermaterials verschieblich angeordnet ist.

6. Vorrichtung nach einem der vorhergehenden Ansprüche, dadurch gekennzeichnet, dass der bzw. jeder Schreibkopf (21) aus einem Tintenejektor besteht.

7. Vorrichtung nach einem der vorhergehenden Ansprüche, dadurch gekennzeichnet, dass die Schreibeinrichtung (18) im Bereich der Ausgabestation (12) angeordnet ist; dass vor und hinter der Schreibeinrichtung (18) je ein Rollenpaar (15, 16) vorgesehen ist, die dauernd mit einer vorbestimmten Umfangsgeschwindigkeit angetrieben werden, welche mindestens der höchsten Durchlaufgeschwindigkeit des Kopiermaterials (4) entspricht, und die im Ruhezustand der Schreibeinrichtung (18) entweder einen Durchtrittsspalt für das Kopiermaterial offenlassen oder schlupfend am Kopiermaterial anliegen; und dass die Rollen beider Rollenpaare (15, 16) im Betriebszustand der Schreibeinrichtung (18) am Kopiermaterial transportierend angreifen.

8. Vorrichtung nach einem der Ansprüche 1 bis 6, dadurch gekennzeichnet, dass die Schreibeinrichtung (18) in Vorschubrichtung des Kopiermaterials (4) vor der Belichtungsstation (6) angeordnet ist.

9. Vorrichtung nach einem der vorhergehenden Ansprüche, dadurch gekennzeichnet, dass die frei programmierbare Steuereinrichtung auch Funktionen der übrigen Einrichtungen (Vorlagenrepetierung u.dgl.) steuert.

10. Vorrichtung nach mindestens einem der vorhergehenden Ansprüche, dadurch gekennzeichnet, dass die Beschriftung des Kopiermaterials (4) zur Steuerung nachgeschalteter Funktionen (Heftrandlochung, Faltung u.dgl.) geeignet ausgebildet ist.

11. Vorrichtung nach Anspruch 7, dadurch gekennzeichnet, dass hinter den beiden Rollenpaaren (15, 16) ein mit geringerer Umfangsgeschwindigkeit angetriebenes drittes Rollenpaar (17) in einem Abstand vom benachbarten Rollenpaar (16) angeordnet ist, der die Ausbildung einer Schleife (4a) von Kopiermaterial (4) zwischen diesen Rollenpaaren (16, 17) erlaubt.

12. Vorrichtung nach Anspruch 6, dadurch gekennzeichnet, dass kurz vor oder hinter der Schreibeinrichtung (18), mit dieser in Vorschubrichtung des Kopiermaterials (4) fluchtend, eine Einrichtung zum Auftragen eines Fluids (wie Wasserdampf oder Alkohol) auf das Kopiermaterial vorgesehen ist, um dessen Beschichtung wenigstens zeitweilig aufzubrechen und die Tinte in seine Papierlage eindringen zu lassen.

13. Vorrichtung nach Anspruch 6 oder 12, dadurch gekennzeichnet, dass der oberhalb der Vorschubbahn des Kopiermaterials (4) angeordnete Tintenejektor durch einen Schlauch mit einem unterhalb der Vorschubbahn angeordneten Tinten-Vorratsbehälter verbunden und der Schlauch nach Art einer Flaschenzug-Einscherung über eine lose Rolle und zwei ortsfeste Rollen geführt ist.

**Claims**

1. A device for copying originals in the form of sheets, in particular a blueprinting machine, having a conveyor mechanism which carries the copy material through an exposure station as well as a development station and conveys it into a delivery station, and having a mechanism for the lettering of the copy material during its advance, which exhibits a writing head which is stationary with respect to the advance and which is connected to a control device and applies the lettering in steps to the copy material running past, characterized in that the control device is freely programmable and on the one hand on the copy material (4) which may be fed at variable speed controls to a predetermined speed of feed that region of it which is to be lettered, directly before it passes by the lettering mechanism (18) and also on the other hand triggers the operation of the lettering mechanism (18) and gives to the writing head (21) programmed writing impulses for constant writing speed.

2. A device as in Claim 1, characterized in that the control device comes into action in dependence upon the passage of the rear edge of the copy material (4) through a monitoring station.

3. A device as in Claim 2, characterized in that the monitoring station comprises one sensor (13).

4. A device as in one of the preceding Claims, characterized in that a multiline writing device (18) exhibits a number of writing heads (21) which are arranged side by side in the direction of feed of the copy material (4), and which are connected in parallel to the control device.

5. A device as in preceding Claims, characterized in that the or respectively each writing head (21) is arranged to be able to shift transversely to the direction of feed of the copy material.

6. A device as in one of the preceding Claims, characterized in that or respectively each writing head (21) consists of an ink ejector.

7. A device as in one of the preceding Claims, characterized in that the writing device (18) is arranged in the region of the delivery station (12),that both before and beyond the writing device (18) is provided one pair of rollers (15, 16) which are driven constantly at a predetermined circumferential speed corresponding at least with the highest running speed of the copy material (4), and which in the state of rest of the writing device (18) either leave open a gap for the copy material to pass through or rest sliding against the copy material, and that the rollers of both pairs of rollers (15, 16) in the operational state of the writing device (18) engage with the copy material to convey it.

8. A device as in one of the Claims 1 to 6, characterized in that the writing device (18) is in the direction of feed of the copy material (4) arranged before the exposure station (6).

9. A device as in one of the preceding Claims, characterized in that the freely programmable control device also controls functions of the remaining devices (repetition of originals or the like).

10. A device as in one of the preceding Claims, characterized in that the lettering of the copy material (4) is made suitable for the control of functions connected later (stitching edge perforation, folding or the like).

11. A device as in Claim 7, characterized in that beyond the two pairs of rollers (15, 16) is arranged a third pair of rollers (17) driven at lower circumferential speed, at a distance from the adjacent pair of rollers (16), which allows the formation of a loop (4a) in the copy material (4) between these pairs of rollers (16, 17).

12. A device as in Claim 6, characterized in that shortly in front of or behind the writing device (18), flush with it in the direction of feed of the copy material (4), a device is provided for the application of a fluid (such as steam or alcohol) to the copy material in order to break up its coating at least temporarily and let the ink penetrate into its paper layer.

13. A device as in Claim 6 or 12, characterized in that the ink ejector arranged above the feedpath of the copy material (4) is connected by a flexible tube to an ink reservoir arranged below the feedpath and the tube is carried after the style of the reeving of a block-and-tackle over one loose roller and two stationary rollers.

**Revendications**

1. Machine de copiage d'originaux sur feuilles, notamment machine de diazocopie, avec un dispositif de transport qui guide la matière de copie à travers un poste d'exposition ainsi qu'un poste de développement et la transporte à un poste de sortie, et avec un appareil pour écrire sur la matière de copie pendant son avance, comportant une tête d'écriture fixe par rapport à l'avance, cette tête étant liée à un dispositif de commande et appliquant l'écriture pas à pas sur la matière de copie qui passe, caractérisée en ce que le dispositif de commande peut être programmé librement et, d'une part, commande la zone d'inscription de la matière de copie (4) déplaçable à vitesse variable à une vitesse d'avance prédéterminée immédiatement avant son passage dans l'appareil d'écriture (18) et, d'autre part, déclenche le fonctionnement de l'appareil d'écriture (18) et envoie à la tête d'écriture (21) des impulsions d'écritures programmées pour une vitesse d'écriture constante.

2. Machine selon la revendication 1, caractérisée en ce que le dispositif de commande entre en action en fonction du passage du bord arrière de la matière de copie (4) dans un poste de contrôle.

3. Machine selon la revendication 2, caractérisée en ce que le poste de contrôle comporte un détecteur (13).

4. Machine selon l'une des revendications précédentes, caractérisée en ce qu'un appareil d'écriture à plusieurs lignes (18) comportent plusieurs têtes d'écriture (21) disposées l'une à côté de l'autre dans la direction d'avance de la matière de copie (4), ces têtes d'écriture étant raccordées en parallèle au dispositif de commande.

5. Machine selon l'une des revendications précédentes, caractérisée en ce que la ou chaque tête d'écriture (21) est disposée pour coulisser transversalement à la direction d'avance de la matière de copie.

6. Machine selon l'une des revendications précédentes, caractérisée en ce que la ou chaque tête d'écriture (21) est constituée d'un éjecteur d'encre.

7. Machine selon l'une des revendications précédentes, caractérisée en ce que l'appareil d'écriture (18) est disposé dans la zone du poste de sortie (12), en ce que devant et derrière l'appareil d'écriture est respectivement disposé un couple de cylindres (15, 16) qui sont entraînés en permanence à une vitesse périphérique prédéterminée au moins égale à la plus grande vitesse de passage de la matière de copie (4), ces cylindres laissant, dans la condition de repos de l'appareil d'écriture (18), un intervalle de passsage ouvert pour la matière de copie ou reposant en glissant sur la matière de copie, et en ce que les cylindres des deux couples de cylindres (15, 16) agissent, dans la condition de fonctionnement de l'appareil d'écriture, sur la matière de copie en l'entraînant.

8. Machine selon l'une des revendications 1 à 6, caractérisée en ce que l'appareil d'écriture (18) est disposé, dans la direction d'avance de la matière de copie (4), devant le poste d'exposition (6).

9. Machine selon au moins l'une des revendications précédentes, caractérisée en ce que le dispositif de commande librement programmable commande également des fonctions des autres dispositifs (répétitions d'originaux et similaires).

10. Machine selon au moins l'une des revendications précédentes, caractérisée en ce que le marquage de la matière de copie (4) est conçu de façon appropriée pour la commande de fonctions disposées en aval (perforation des marges, pliage et similaires).

11. Machine selon la revendication 7, caractérisée en ce que derrière les deux couples de cylindres (15, 16), est disposé un troisième couple de cylindres entraînés à une plus faible vitesse périphérique (17), à une distance du couple de cylindres voisins (16) permettant la formation d'une boucle (4a) de matière de copie (4) entre ces couples de cylindres (16, 17).

12. Machine selon la revendication 6, caractérisée en ce qu'à peu de distance devant ou derrière l'appareil d'écriture (18) est prévu un dispositif, aligné avec l'appareil dans la direction de l'avance de la matière de copie (4), pour appliquer un fluide (tel que la vapeur d'eau ou l'alcool) sur la matière de copie pour éliminer son revêtement, au moins temporairement, et pour faire pénétrer l'encre dans sa couche de papier.

13. Machine selon la revendication 6 ou 12, caractérisée en ce que l'éjecteur d'encre disposé au-dessus de la piste d'avance de la matière de copie (4) est relié par un tuyau souple à un réservoir de stockage d'encre disposé au-dessous de la piste d'avance, le tuyau souple étant guidé à la manière d'un moufle de palan sur une poulie folle et deux poulies à position fixe.

Fig. 1

0 121 836

Fig.2

0 121 836